# EUROPÄISCHE PATENTSCHRIFT

(11) **EP 1 910 723 B1**
(45) Veröffentlichungstag und Bekanntmachung des Hinweises auf die Patenterteilung: **13.01.2010**
(21) Anmeldenummer: 06818223.7
(22) Anmeldetag: 08.07.2006
(51) Int. Cl.: F16K 31/06, F16K 11/048

(54) **ELEKTROMAGNETISCHES HYDRAULIKVENTIL**
ELECTROMAGNETIC HYDRAULIC VALVE
ELECTROVANNE HYDRAULIQUE

(30) Priorität: 27.07.2005 DE 102005034938
(43) Veröffentlichungstag der Anmeldung: 16.04.2008
(73) Patentinhaber: Schaeffler KG, 91074 Herzogenaurach (DE)
(72) Erfinder: ROSS, Christoph, 96047 Bamberg (DE); STOECKEL, Herbert, 91322 Gräfenberg (DE)
(86) Internationale Anmeldenummer: PCT/EP2006/006703
(87) Internationale Veröffentlichungsnummer: WO 2007/025600

(56) Entgegenhaltungen:
- EP-A- 1 544 525
- US-A- 5 056 556
- US-A1- 2003 159 453
- US-A1- 2003 159 454
- US-A1- 2003 160 672

## Beschreibung

### Gebiet der Erfindung

Die Erfindung betrifft ein elektromagnetisches Hydraulikventil mit den Merkmalen des Oberbegriffs des Anspruchs 1.

### Hintergrund der Erfindung

Hydraulikventile, die zur Gewährleistung einer dauerhaften Funktionsfähigkeit der Hydraulikventile selbst oder stromabwärts verlaufender Bauteile Mittel zur Abscheidung von Schmutzpartikeln aus dem Hydraulikmittel aufweisen, sind im Stand der Technik bekannt. Diese Schmutzpartikel gelangen als Schwebeteilchen im Hydraulikmittel in das Hydraulikventil und haben ihren Ursprung zum einen in so genanntem Restschmutz, der bei der Fertigung beispielsweise einer Brennkraftmaschine. überwiegend in Form metallischer Partikel anfällt und auch durch aufwändige Reinigungsmaßnahmen nicht vollständig entfernt werden kann. Zum anderen entstehen diese Schmutzpartikel durch permanenten Abrieb an bewegten Bauteilen im Betrieb der Brennkraftmaschine. So kann die Funktionsfähigkeit insbesondere von horizontal eingebauten Hydraulikventilen durch übermäßiges Eindringen von Schmutzpartikeln zwischen Magnetanker und dessen Ankerführung gefährdet sein. Die daraus resultierende Schwergängigkeit des. Magnetankers führt in der Regel zu einer erheblichen Beeinträchtigung der Umschaltdynamik des Hydraulikventils und äußert sich in einem reduzierten und/oder stark schwankenden Gradienten des zu steuernden Hydraulikmitteldrucks. Im Extremfall können in die Ankerführung gelangende Schmutzpartikel einen vollständigen Ausfall des Hydraulikventils in Folge eines klemmenden Magnetankers verursachen.

So ist in der als gattungsbildend betrachteten DE 196 31 631 A1 ein elektromagnetisches Hydraulikventil vorgeschlagen, dessen Druckanschluss ein Siebfilter zur einlassseitigen Abscheidung von Schmutzpartikeln aufweist. Diese Methode ist jedoch mit einigen Nachteilen verbunden, welche nachfolgend erläutert sind.

Zunächst wird nicht berücksichtigt, dass herstellbedingte Schmutzrückstände im Hydraulikventil selbst sowie Schmutzpartikel, die durch das betriebliche Zusammenwirken bewegter Bauteile im Hydraulikventil entstehen, zu einer Funktionsbeeinträchtigung des Hydraulikventils sowie stromabwärts verlaufender Bauteile über deren angestrebter Lebensdauer führen können.

Weiterhin ist der Abscheidegrad des Siebfilters von dessen Maschenweite oder der Größe der Durchlassöffnungen abhängig. Insofern wird auch ein Eindringen fremder Schmutzpartikel in das Hydraulikventil lediglich begrenzt, jedoch nicht vollständig verhindert. Diese Einschränkung ist insbesondere bei Hydraulikventilbauarten von Nachteil, bei welchen das Hydraulikventil mit von mehreren Anschlussleitungen kommendem Hydraulikmittel durchströmt wird. So wäre es beispielsweise bei einem 3/2-Wegeventil zur Erzielung der (begrenzten) Wirkung zumindest erforderlich, sowohl den Druckanschluss P als auch den Arbeitsanschluss A mit einem Filterelement zu versehen, da in einer zweiten Schaltstellung eines solchen Hydraulikventils das Hydraulikmittel aus der Arbeitsleitung A kommend in Richtung des Tankanschlusses T strömt. Der Einbau eines zweiten Filterelements ist jedoch mit entsprechend hohem und kostenintensivem Bauaufwand verbunden.

Darüber hinaus ist zum Zurückhalten von sehr kleinen Partikeln ein Fein- oder Feinstfilter vorzusehen, der jedoch einen unerwünscht hohen Druckverlust des Hydraulikmittels beim Eintritt und im Falle des vorgenannten 3/2-Wegeventils mit zwei Filterelementen auch beim Austritt aus dem Hydraulikventil erzeugt. Dieser Druckverlust steigt zudem mit der Beladung des Filters mit Schmutzpartikeln im Laufe der Zeit an.

Ein elektromagnetisches Hydraulikventil ist aus der Druckschrift US 5 056 556 bekannt.

### Aufgabe der Erfindung

Der Erfindung liegt daher die Aufgabe zugrunde, diese geschilderten Nachteile zu vermeiden und ein elektromagnetisches Hydraulikventil der vorgenannten Art zu schaffen, dessen Mittel zur Abscheidung der Schmutzpartikel die Funktionsfähigkeit des Hydraulikventils dauerhaft gewährleistet. Dabei soll insbesondere die Ankerführung vor eindringenden Schmutzpartikeln weitestgehend geschützt werden, um ein temporäres oder permanentes Klemmen des Magnetankers in der Ankerführung wirksam zu verhindern. Das Hydraulikventil soll außerdem möglichst kostengünstig herstellbar sein.

### Zusammenfassung der Erfindung

Erfinduflgsgemäß wird die Aufgabe durch die kennzeichnenden Merkmale des Anspruchs 1 gelöst, während vorteilhafte Weiterbildungen und Ausgestaltungen den Unteransprüchen zu entnehmen sind.

Gemäß dem kennzeichnenden Teil des Anspruchs 1 besteht das Mittel zur Abscheidung der Schmutzpartikel in einem zwischen der Ankerführung und den Anschlussöffnungen angeordneten Zwischenboden, der mit einer Innenmantelfläche des Ventilgehäuses hydraulisch dichtend abschließt. Dabei besteht das Ventilgehäuse zwecks Abscheidung ferromagnetischer Schmutzpartikel aus einem magnetisierbaren Werkstoff. Die Funktionsfähigkeit des so ausgebildeten Hydraulikventils wird insbesondere dadurch dauerhaft sichergestellt, dass das Hydraulikventil primär im Bereich der Anschlussöffnungen mit Hydraulikmittel durchströmt ist, während der Magnetanker und dessen Ankerführung durch den Zwischenboden abgeschirmt sind. Somit werden Schmutzpartikel, die über die Anschlussöffnungen in das Innere des Hydraulikventils gelangen -und soweit sie nicht mit der Hydraulikmittelströmung aus dem Ventil heraus transportiert werden-, durch die abschirmende Wirkung des Zwischenbodens vom Magnetanker und dessen Führung ferngehalten. Da gleichzeitig das Ventilgehäuse magnetisierbar ist und im Betrieb des Hydraulikventils durch die Wirkung des bestromten Elektromagneten auch magnetisiert wird, lagern sich die überwiegend ferromagnetischen Schmutzpartikel auf der dem Magnetanker abgewandten Seite des Zwischenbodens an der Innenmantelfläche des Ventilgehäuses ab. Ein Weitertransport der abgelagerten Schmutzpartikel in Richtung des Magnetankers wird dann insbesondere auch bei einem horizontal eingebautem Hydraulikventil dadurch verhindert, dass der Zwischenboden mit der Innenmantelfläche des Ventilgehäuses hydraulisch dichtend abschließt.

Eine besonders effektive Abscheidung der ferromagnetischen Schmutzpartikel an das magnetisierte Ventilgehäuse bei gleichzeitigem Fernhalten der Partikel aus der unmittelbaren Umgebung des Ventilstößels wird besonders effektiv dadurch erzielt, dass der Zwischenboden als Einzelteil hergestellt ist und aus einem nicht magnetisierbaren Werkstoff besteht. Die hydraulisch dichte Verbindung dieses Einzelteils mit dem Ventilgehäuse erfolgt durch eine form-, kraft- oder stoffschlüssige Verbindung. Als nicht magnetisierbarer Werkstoff des so ausgebildeten Zwischenbodens soll neben Kunststoff zweckmäßigerweise ein austenitisch korrosionsbeständiger Stahl, wie beispielsweise X5CrNi1810, vorgesehen sein.

Der als Einzelteil hergestellte Zwischenboden kann weiterhin als dünnwandige und napfförmige Ringhülse mit einer zylindrischen Außenmantelfläche und einem Boden, der den Ventilstößel mit einer zur Außenmantelfläche konzentrischen Öffnung umgreift, ausgebildet sein. Dabei ist die Ringhülse über die Außenmantelfläche in die Innenmantelfläche des Ventilgehäuses so eingepresst, dass die offene Seite der Ringhülse dem Magnetanker zugewandt ist. Vorteilhaft an dieser Ausbildung des Zwischenbodens ist die besonders kostengünstig zu fertigende und einfach zu montierende Ringhülse in das Ventilgehäuse. Ein weiterer Erfindungsgedanke sieht dabei vor, dass der Boden der Ringhülse konusartig derart geformt ist, dass zwischen einer dem Magnetanker abgewandten Außenseite des Bodens und der Innenmantelfläche des Ventilgehäuses ein Ringraum für abgeschiedene Schmutzpartikel gebildet ist. Die so gestaltete Ringhülse entfaltet somit gleichsam eine optimale Speicherwirkung, da die geringen Strömungsgeschwindigkeiten im Ringraum einen dortigen Verbleib der abgelagerten Schmutzpartikel begünstigen.

In weiterer Fortbildung der Erfindung soll das Hydraulikventil als 3/2-Wegeventil ausgebildet sein, wobei die Anschlussöffnungen als Druckanschluss P, Arbeitsanschluss A und Tankanschluss T dienen. Insbesondere das 3/2-Wegeventil lässt sich sowohl funktionssicher als auch kostengünstig dadurch herstellen, dass der Ventilstößel als Formkörper aus Kunststoff hergestellt ist und vorstehende Leisten aufweist, mit denen er auf der dem Magnetanker zugewandten Seite des Zwischenbodens im Ventilgehäuse geführt ist. Dabei sollen die. Dichtkörper des Ventilstößels auf der dem Magnetanker abgewandten Seite des Zwischenbodens verlaufen und konusförmige und sich zugewandte Dichtflächen aufweisen, die wechselweise mit Ventilsitzen zusammenwirken, die an den napfförmig ausgebildeten und in das Ventilgehäuse eingepressten Dichthülsen angeformt sind.

Ferner soll zwischen dem Ventilstößel und dem Zwischenboden zumindest ein Überströmquerschnitt in Richtung des Magnetankers verbleiben. Ein solcher Überströmquerschnitt dient einerseits zum Volumen- und Druckausgleich innerhalb des Hydraulikventils bei Hubbewegungen des Magnetankers und des Ventilstößels. Andererseits wird durch den Übertritt von Hydraulikmittel eine ausreichende Schmierung des in der Ankerführung längsbewegten Magnetankers sichergestellt. Zwar ist während eines Überströmvorganges von Hydraulikmittel ein Transport von Schmutzpartikeln in Richtung des Magnetankers nicht ausgeschlossen, jedoch handelt es sich aufgrund der zuvor beschriebenen abschirmenden Wirkung des Zwischenbodens allenfalls nur um eine vernachlässigbar kleine Menge an Schmutzpartikeln, deren ferromagnetischer Anteil sich zudem überwiegend an der magnetisierten Innenmantelfläche des Ventilgehäuses jenseits des Zwischenbodens ablagern würde.

Das Hydraulikventil soll bevorzugt zur Ansteuerung hydraulisch verlagerbarer Stellglieder eines variablen Ventiltriebs einer Brennkraftmaschine dienen. Derartige Stellglieder sind dem Fachmann auf dem Gebiet variabler Ventiltriebe unter anderem als hydraulisch betätigte Koppelmittel bekannt, wie sie beispielsweise in Nockenwellenverstellern, variabel umschaltbaren Nocken einer Nockenwelle oder zur Um- oder Abschaltung von Gaswechselventilen bei schaltbaren Nockenfolgern in Form von schaltbaren Stößeln, Hebeln oder Abstützelementen zum Einsatz kommen. Bei der hydraulischen Ansteuerung solcher Koppelmittel kommt es auf einen möglichst hohen, gering schwankenden sowie reproduzierbaren Gradienten des Hydraulikmitteldrucks in der Arbeitsleitung beim Umschalten zwischen den beiden Stellungen des Hydraulikventils an. Dies liegt im Falle der umschaltbaren Nocken oder der schaltbaren Nockenfolger darin begründet, dass der Umschaltvorgang der Koppelmittel stets in der nur sehr kurzen Zeit einer Nockengrundkreisphase für alle beteiligten Nockenfolger erfolgreich abgeschlossen sein muss.

### Kurze Beschreibung der Zeichnungen

In beiliegenden Zeichnungen ist das erfindungsgemäße elektromagnetische Hydraulikventil am Beispiel eines 3/2-Wegeventils dargestellt. Es zeigen:
- Figur 1: einen Längsschnitt durch das 3/2-Wegeventil,
- Figur 2: die Einzelheit Z aus Figur 1 und
- Figur 3: den Schnitt A-A gemäß Figur 1

### Ausführliche Beschreibung der Zeichnung

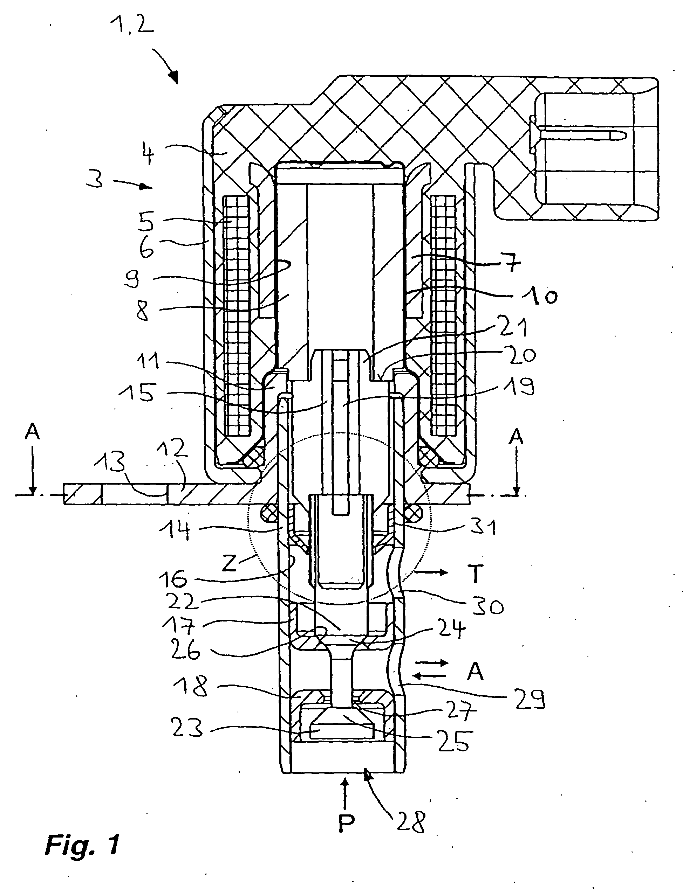

Aus Figur 1 geht ein elektromagnetisches Hydraulikventil 1 hervor, welches als 3/2-Wegeventil 2 ausgebildet und zur Steuerung eines variablen Ventiltriebs einer nicht dargestellten Brennkraftmaschine einsetzbar ist. Das Hydraulikventil 1 besteht aus einem Elektromagnet 3 mit einer in einem Spulenkörper 4 aus Kunststoff eingegossenen Spulenwicklung 5 in einem Magnetgehäuse 6. Als oberer Magnetpol für einen Magnetanker 8 dient eine ebenfalls in den Spulenkörper 4 eingegossene Hülse 7, die eine als Ankerführung 9 dienende, amagnetische Metallhülse 10 umschließt in welcher der Magnetanker 8 längsbeweglich geführt ist. Ein unterer Magnetpol wird durch einen Ringbund 11 gebildet, der in einen Flanschbereich 12 mit einer Verschraubungsöffnung 13 zur Befestigung des Hydraulikventils 1 an einer geeigneten Stelle der Brennkraftmaschine übergeht.

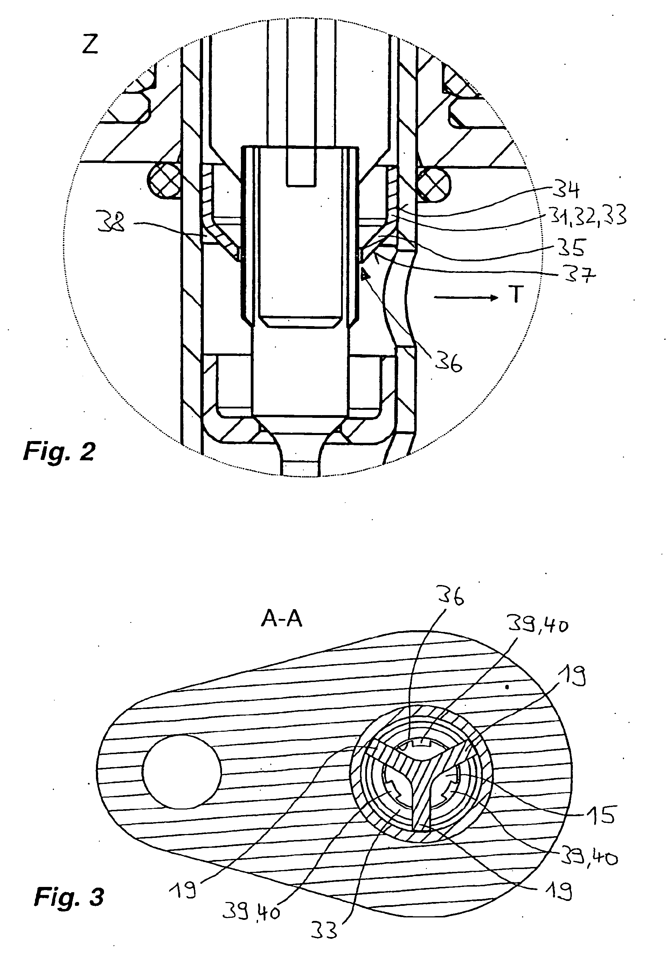

In dem Ringbund 11 des unteren Magnetpols ist weiterhin ein dem Elektromagneten 3 zugewandter oberer Abschnitt eines Ventilgehäuses 14 aufgenommen. Das Ventilgehäuse 14 ist rohrförmig ausgebildet und besteht aus einem magnetisierbaren Werkstoff, der während des Betriebs des Hydraulikventils 1 in Folge der elektromagnetischen Wirkung des bestromten Elektromagneten 3 magnetisiert wird. Das Ventilgehäuse 14 beherbergt einen sich an den Magnetanker 8 anschließenden Ventilstößel 15 sowie zwei napfförmig ausgebildete und in eine Innenmantelfläche 16 des Ventilgehäuses 14 eingepresste Dichthülsen 17, 18. Der Ventilstößel 15 ist als Formkörper aus Kunststoff hergestellt und, wie in Figur 3 deutlich erkennbar, mit drei um 120° zueinander versetzt angeordneten Leisten 19 in der Innenmantelfläche 16 des Ventilgehäuses 14 längsbeweglich geführt. Weiterhin steht der Ventilstößel 15 durch eine am Magnetanker 8 anliegende Stirnseite 20 und durch einen an die Stirnseite 20 angeformten und in den hohlzylindrisch ausgebildeten Magnetanker 8 hineinragenden Zentrierzapfen 21 in loser Wirkverbindung mit dem Magnetanker 8. Ausgehend von den Leisten 19 verjüngt sich der Ventilstößel 15 und weist auf der dem Magnetanker 8 abgewandten Seite zwei Dichtkörper 22, 23 mit konusförmigen und sich zugewandten Dichtflächen 24, 25 auf. Die Dichtflächen 24, 25 wirken wechselweise mit Ventilsitzen 26, 27 zusammen, die an den Dichthülsen 17, 18 angeformt sind.

Die Steuerung des Hydraulikmittelflusses durch das Hydraulikventil 1 erfolgt auf die nachfolgend beschriebene Weise. In Figur 1 ist eine erste Schaltstellung des Hydraulikventils 1 dargestellt. In dieser ersten Schaltstellung befindet sich die Spulenwicklung 5 in bestromtem Zustand, so dass der Magnetanker 8 unter Mitnahme des Ventilstößels 15 aufgrund der magnetischen Anziehungskraft vom unteren Magnetpol angezogen und in dessen Richtung verlagert ist. In dieser Stellung liegt die Dichtfläche 24 des ersten Dichtkörpers 22 am Ventilsitz 26 der dem Magnetanker 8 zugewandten Dichthülse 17 an. Gleichzeitig ist die Dichtfläche 25 des zweiten Dichtkörpers 23 zum Ventilsitz 27 der dem Magnetanker 8 abgewandten Dichthülse 18 beabstandet. Somit kann sich ein Hydraulikmittelfluss zwischen einem Druckanschluss P, der durch eine axiale Mündung 28 des rohrförmigen Ventilgehäuses 14 gebildet ist, und einem Arbeitsanschluss A, der durch eine zwischen den Dichthülsen 17, 18 radial angeordnete Öffnung 29 im Ventilgehäuse 14 gebildet ist, einstellen. In dieser Schaltstellung des Hydraulikventils 1 wird folglich ein mit dem Arbeitsanschluss A kommunizierendes Stellglied des variablen Ventiltriebs mit druckbeaufschlagtem Hydraulikmittel versorgt, um beispielsweise einen Stellweg oder einen Stellwinkel zurück zu legen.

Zur Rückkehr des Stellglieds in seine Ausgangsposition wird die Bestromung der Spulenwicklung 5 abgeschaltet. In diesem stromlosen Zustand des Elektromagneten 3 wirken keine elektromagnetischen Kräfte auf den Magnetanker 8, so dass dieser gemeinsam mit dem durch Staudruck des Hydraulikmittels kraftbeaufschlagten Ventilstößel 15 in Richtung der zweiten Schaltstellung des Hydrautikventils 1 verlagert wird. Diese Schaltstellung ist erreicht, wenn sich die Dichtfläche 25 dies zweiten Dichtkörpers 23 im Ventilsitz 27 befindet, so dass der Hydraulikmittelfluss zwischen dem Druckanschluss P und dem Arbeitsanschluss A unterbrochen ist. Da gleichzeitig die Dichtfläche 24 des ersten Dichtkörpers 22 vom Ventilsitz 26 beabstandet ist, wird ein Hydraulikmittelfluss zwischen dem Arbeitsanschluss A und einem Tankanschluss T zugelassen. Der Tankanschluss T ist wie der Arbeitsanschluss A als radiale Öffnung 30 im Ventilgehäuse 14 ausgebildet und verbindet das Hydraulikventil 1 mit einem drucklosen Hydraulikmittelreservoir der Brennkraftmaschine. Folglich kann das dem Stellweg oder Stellwinkel des rückkehrenden Stellgliedes entsprechende Hydraulikmittelvolumen über den Tankanschluss T abfließen.

Ein Eindringen von Schmutzpartikeln in den schmutzempfindlichen Führungsspalt zwischen der Ankerführung 9 und dem Magnetanker 8 wird insbesondere im horizontalen Einbaufall des Hydraulikventils 1 durch die abschirmende Wirkung eines zwischen der Ankerführung 9 und den Anschlüssen P, A, T im Ventilgehäuse 14 angeordneten Zwischenbodens 31 weitestgehend verhindert. Der Zwischenboden 31 ist in der in Figur 2 gezeigten Einzelheit Z vergrößert dargestellt und im Ausführungsbeispiel als Einzelteil 32 in Form einer dünnwandigen und napfförmigen Ringhülse 33 ausgebildet. Diese ist mit einer zylindrischen Außenmantelfläche 34 zwischen den Leisten 19 des Ventilstößels 15 und dem Tankanschluss T in die. Innenmantelfläche 16 des Ventilgehäuses 14 hydraulisch dichtend eingepresst. Weiterhin weist die Ringhülse 33 einen Boden 35 auf, der den Ventilstößel 15 mit einer zur Außenmantelfläche 34 konzentrischen Öffnung 36 spielbehaftet und folglich reibungsfrei sowie ohne Führungsfunktion umgreift. Dadurch, dass der Boden 35 der Ringhülse 33 konusartig geformt ist und die offene Seite der Ringhülse 33 dem Magnetanker 8 zugewandt ist, wird zwischen einer dem Magnetanker 8 abgewandten Außenseite 37 des Bodens 35 und der Innenmantelfläche 16 des Ventilgehäuses 14 ein Ringraum 38 gebildet. Aufgrund des sich im Betrieb des Hydraulikventils 1 magnetisierenden Ventilgehäuses 14 werden die überwiegend ferromagnetischen Schmutzpartikel vom Ventilgehäuse 14 angezogen und können sich im Bereich des Ringraumes 38 ablagern. Darüber hinaus besteht die Ringhülse 33 aus einem nicht magnetisierbaren Werkstoff, um einer Ablagerung von Schmutzpartikeln in unmittelbarer Nähe des Ventilstößels 15 und somit einem Transport angelagerter Schmutzpartikel in Richtung des Magnetankers 8 entgegenzuwirken.

Als geeigneter Werkstoff für die Ringhülse 33 ist ein austenitisch korrosionsbeständiger Stahl beispielsweise der Qualität X5CrNi1810 vorgesehen. Alternativ kann die Ringhülse 33 jedoch auch aus Kunststoff hergestellt sein, wobei in diesem Fall die Verbindung mit dem Ventilgehäuse 14 vorzugsweise auch formschlüssige Anteile, wie beispielsweise eine Clipsverbindung hätte. Alternativ soll dennoch auch die Möglichkeit nicht ausgeschlossen sein, die Ringhülse 33 aus einem Permanentmagnetwerkstoff herzustellen.

Wie aus dem Figur 3 dargestellten Schnitt A-A ersichtlich ist, befinden sich zwischen der Öffnung 36 der Ringhülse 33 und dem Ventilstößel 15 drei Überströmquerschnitte 39 für Hydraulikmittel in Richtung des Magnetankers 8. Diese Überströmquerschnitte 39 resultieren aus Längsnuten 40, die im Ventilstößel 15 winkelversetzt zu den Leisten 19 verlaufen. Die Überströmquerschnitte 39 sind einerseits zum Druck- und Volumenausgleich des Hydraulikmittels beim Umschaltvorgang des Magnetankers 8 und des Ventilstößels 15 erforderlich und sorgen andererseits für ausreichende Schmierung der Ankerführung 9 mit Hydraulikmittel. Obwohl durch diese Überströmquerschnitte 39 ein Transport von Schmutzpartikeln in den Bereich des Magnetankers 8 und der Ankerführung 9 nicht ausgeschlossen ist, wird erfindungsgemäß sichergestellt, dass sich der überwiegende Teil der Schmutzpartikel im Bereich der Ringhülse 33 und des magnetisierten Ventilgehäuses 14 ablagert und dort verbleibt oder aus dem Hydraulikventil 1 wieder ausgespült wird. Insofern ist das erfindungsgemäße Hydraulikventil 1 gegenüber dem Stand der Technik mit einem einfachen und kostengünstig umzusetzenden Mittel weitestgehend vor temporärem oder permanentem Klemmten des Magnetankers 8 in der Ankerführung 9 aufgrund eindringender Schmutzpartikel geschützt.

### Bezugszeichenliste

- 1: Hydraulikventil
- 2: 3/2-Wegeventil
- 3: Elektromagnet
- 4: Spulenkörper
- 5: Spulenwicklung
- 6: Magnetgehäuse
- 7: Hülse
- 8: Magnetanker
- 9: Ankerführung
- 10: Metallhülse
- 11: Ringbund
- 12: Flanschbereich
- 13: Verschraubungsöffnung
- 14: Ventilgehäuse
- 15: Ventilstößel
- 16: Innenmantelfläche
- 17: Dichthülse
- 18: Dichthülse
- 19: Leiste
- 20: Stirnseite
- 21: Zentrierzapfen
- 22: Dichtkörper
- 23: Dichtkörper
- 24: Dichtfläche
- 25: Dichtfläche
- 26: Ventilsitz
- 27: Ventilsitz
- 28: axiale Mündung
- 29: Öffnung
- 30: Öffnung
- 31: Zwischenboden
- 32: Einzelteil
- 33: Ringhülse
- 34: Außenmantelfläche
- 35: Boden
- 36: Öffnung
- 37: Außenseite
- 38: Ringraum
- 39: Überströmquerschnitt
- 40: Längsnuten

- P: Druckanschluss
- A: Arbeitsanschluss
- T: Tankanschluss

## Patentansprüche

1. Elektromagnetisches Hydraulikventil (1) mit einem in einer Ankerführung (9) längsbeweglich geführten Magnetanker (8), der einen in einem Ventilgehäuse (14) verlaufenden Ventilstößel (15) betätigt, welcher die Verbindung zwischen im Ventilgehäuse (14) ausgebildeten Anschlussöffnungen (28, 29, 30) für Hydraulikmittel steuert, indem der Ventilstößel (15) in Wirkverbindung mit einem oder mehreren Dichtkörpern (22, 23) steht, die mit einem oder mehreren am Ventilgehäuse (14) abgestützten Dichthülsen (17, 18) derart korrespondieren, dass Dichtflächen (24, 25) der Dichtkörper (22, 23) mit an den Dichthülsen (17, 18) angeformten Ventilsitzen (26, 27) zusammenwirken, wobei das Hydraulikventil (1) ein Mittel zur Abscheidung von Schmutzpartikeln aufweist wobei, das Mittel in einem zwischen der Ankerführung (9) und den Anschlussöffnungen (28, 29, 30) angeordneten Zwischenboden (31) besteht, der mit einer Innenmantelfläche (16) des Ventilgehäuses (14) hydraulisch dichtend abschließt, wobei das Ventilgehäuse (14) zwecks Abscheidung ferromagnetischer Schmutzpartikel aus einem magnetisierbaren Werkstoff besteht und wobei der Zwischenboden (31) als Einzelteil (32) hergestellt ist, und mit dem Ventilgehäuse (14) formschlüssig, kraftschlüssig oder stoffschlüssig verbunden ist **dadurch gekennzeichnet, dass** der Zwischenboden (31) aus einem nicht magnetisierbaren Werkstoff besteht.

2. Hydraulikventil nach Anspruch 1, **dadurch gekennzeichnet, dass** das Einzelteil (32) aus austenitisch korrosionsbeständigem Stahl gefertigt ist.

3. Hydraulikventil nach Anspruch 1, **dadurch gekennzeichnet, dass** das Einzelteil (32) als dünnwandige und napfförmige Ringhülse (33) mit einer zylindrischen Außenmantelfläche (34) und einem Boden (35), der den Ventilstößel (15) mit einer zur Außenmantelfläche (34) konzentrischen Öffnung (36) umgreift, ausgebildet ist und über die Außenmantelfläche (34) in die Innenmantelfläche (16) des Ventilgehäuses (14) so eingepresst ist, dass die offene Seite der Ringhülse (33) dem Magnetanker (8) zugewandt ist.

4. Hydraulikventil nach Anspruch 3, **dadurch gekennzeichnet, dass** der Boden (35) der Ringhülse (33) konusartig derart, geformt ist, dass zwischen einer dem Magnetanker (8) abgewandten Außenseite (37) des Bodens (35) und der Innenmantelfläche (16) des Ventilgehäuses (14) ein Ringraum (38) für abgeschiedene Schmutzpartikel gebildet ist.

5. Hydraulikventil nach Anspruch 1, **dadurch gekennzeichnet, dass** das Hydraulikventil (1) als 3/2-Wegeventil (2) ausgebildet ist, wobei die Anschlussöffnungen (28, 29, 30) als Druckanschluss (P), Arbeitsanschluss (A) und Tankanschluss (T) dienen.

6. Hydraulikventil nach Anspruch 1, **dadurch gekennzeichnet, dass** der Ventilstößel (15) als Formkörper aus Kunststoff hergestellt ist und vorstehende Leisten (19) aufweist, mit denen er auf der dem Magnetanker (8) zugewandten Seite des Zwischenbodens (31) im Ventilgehäuse (14) geführt ist, während die Dichtkörper (22, 23) des Ventilstößels (15) auf der dem Magnetanker (8) abgewandten Seite des Zwischenbodens (31) verlaufen und konusförmige und sich zugewandte Dichtflächen (24, 25) aufweisen, die wechselweise mit den Ventilsitzen (26, 27) zusammenwirken, die an den napfförmig ausgebildeten und in das Ventilgehäuse eingepressten Dichthülsen (17, 18) angeformt sind.

7. Hydraulikventil nach Anspruch 1, **dadurch gekennzeichnet, dass** zwischen dem Ventilstößel (15) und dem Zwischenboden (31) zumindest ein Überströmquerschnitt (39) in Richtung des Magnetankers (8) verbleibt.

8. Hydraulikventil nach Anspruch 1, **dadurch gekennzeichnet, dass** das Hydraulikventil (1) zur Ansteuerung hydraulisch verlagerbarer Stellglieder eines variablen Ventiltriebs einer Brennkraftmaschine dient.

## Claims

1. Electromagnetic hydraulic valve (1) with a magnet armature (8) which is guided longitudinally moveably in an armature guide (9) and which activates a valve tappet (15) which runs in a valve housing (14) and which controls the connection between connecting ports (28, 29, 30), formed in the valve housing (14), for hydraulic medium, in that the valve tappet (15) is connected operatively to one or more sealing bodies (22, 23) which match with one or more sealing sleeves (17, 18) supported on the value housing (14), in such a way that sealing surfaces (24, 25) of the sealing bodies (22, 23) cooperate with valve seats (26, 27) integrally formed on the sealing sleeves (17, 18), the hydraulic valve (1) having a means for the separation of dirt particles, the means consisting of an intermediate bottom (31) which is arranged between the armature guide (9) and the connecting ports (28, 29, 30) and which lies flush in a hydraulically sealing manner with an inner surface area (16) of the value housing (14), the value housing (14) consisting of a magnetisable material for the purpose of the separation of ferromagnetic dirt particles, and the intermediate bottom (31) being produced as an individual part (32) and being connected positively, non-positively or materially integrally to the value housing (14), **characterized in that** the intermediate bottom (31) consists of a non-magnetizable material.

2. Hydraulic valve according to Claim 1, **characterized in that** the individual part (32) is manufactured from austenitically corrosion-resistant steel.

3. Hydraulic valve according to Claim 1, **characterized in that** the individual part (32) is designed as a thin-walled and cup-shaped annular sleeve (33) with a cylindrical outer surface area (34) and with a bottom (35) which surrounds the valve tappet (15) with an orifice (36) concentric to the outer surface area (34) and is pressed via the outer surface area (34) into the inner surface area (16) of the valve housing (14) so that the open side of the annular sleeve (33) faces the magnet armature (8).

4. Hydraulic valve according to Claim 3, **characterized in that** the bottom (35) of the annular sleeve (33) is shaped conically in such a way that an annular space (38) for separated dirt particles is formed between an outside (37), facing away from the magnet armature (8), of the bottom (35) and the inner surface area (16) of the valve housing (14).

5. Hydraulic valve according to Claim 1, **characterized in that** the hydraulic valve (1) is designed as a 3/2-way valve (2), the connecting ports (28, 29, 30) serving as a pressure connection (P), working connection (A) and tank connection (T).

6. Hydraulic valve according to Claim 1, **characterized in that** the valve tappet (15) is produced as a moulding from plastic and has projecting strips (19), by means of which it is guided in the valve housing (14) on that side of the intermediate bottom (31) which faces the magnet armature (8), while the sealing bodies (22, 23) of the valve tappet (15) run on that side of the intermediate bottom (31) which faces away from the magnet armature (8) and have conical sealing surfaces (24, 25) facing one another which cooperate alternately with the valve seats (26, 27) which are integrally formed on the sealing sleeves (17, 18) of cup-shaped design which are pressed into the valve housing.

7. Hydraulic valve according to Claim 1, **characterized in that** at least one overflow cross section (39) in the direction of the magnet armature (8) remains between the valve tappet (15) and the intermediate bottom (31).

8. Hydraulic valve according to Claim 1, **characterized in that** the hydraulic valve (1) serves for the activation of hydraulically displaceable actuating members of a variable valve drive of an internal combustion engine.

## Revendications

1. Electrovanne hydraulique (1) comprenant un induit magnétique (8) guidé de manière déplaçable longitudinalement dans un guidage d'induit (9), qui actionne un poussoir de soupape (15) s'étendant dans un boîtier de soupape (14), qui commande la liaison entre des ouvertures de raccordement (28, 29, 30) réalisées dans le boîtier de soupape (14) pour du fluide hydraulique, le poussoir de soupape (15) étant en liaison fonctionnelle avec un ou plusieurs corps d'étanchéité (22, 23), qui correspondent avec une ou plusieurs douilles d'étanchéité (17, 18) supportées sur le boîtier de soupape (14), de telle sorte que des surfaces d'étanchéité (24, 25) des corps d'étanchéité (22, 23) coopèrent avec des sièges de soupape (26, 27) formés sur les douilles d'étanchéité (17, 18), la soupape hydraulique (1) présentant un moyen pour séparer des particules de poussière, le moyen se composant d'un fond intermédiaire (31) disposé entre le guidage d'induit (9) et les ouvertures de raccordement (28, 29, 30), qui se termine de manière scellée hydrauliquement par une surface d'enveloppe intérieure (16) du boîtier de soupape (14), le boîtier de soupape (14) se composant d'un matériau aimantable en vue de la séparation de particules de poussière ferromagnétiques, et le fond intermédiaire (31) étant réalisé sous forme de pièce séparée (32) et étant connecté par engagement par correspondance géométrique, par force ou par liaison de matière au boîtier de soupape (14), **caractérisée en ce que** le fond intermédiaire (31) se compose d'un matériau non aimantable.

2. Soupape hydraulique selon la revendication 1, **caractérisée en ce que** la partie séparée (32) est fabriquée d'acier austénitique résistant à la corrosion.

3. Soupape hydraulique selon la revendication 1, **caractérisée en ce que** la partie séparée (32) est réalisée en tant que douille annulaire (33) à paroi mince et en forme de cuvette, avec une surface d'enveloppe extérieure cylindrique (34) et un fond (35), qui vient en prise autour du poussoir de soupape (15) avec une ouverture (36) concentrique à la surface d'enveloppe extérieure (34), et est pressée par le biais de la surface d'enveloppe extérieure (34) dans la surface d'enveloppe intérieure (16) du boîtier de soupape (14) de telle sorte que le côté ouvert de la douille annulaire (33) soit tourné vers l'induit magnétique (8).

4. Soupape hydraulique selon la revendication 3, **caractérisée en ce que** le fond (35) de la douille annulaire (33) est formé en forme de cône de telle sorte qu'entre un côté extérieur (37) du fond (35), opposé à l'induit magnétique (8), et la surface d'enveloppe intérieure (16) du boîtier de soupape (14), soit formé un espace annulaire (38) pour des particules de poussière séparées.

5. Soupape hydraulique selon la revendication 1, **caractérisée en ce que** la soupape hydraulique (1) est réalisée sous forme de soupape à 2/3 voies (2), les ouvertures de raccordement (28, 29, 30) servant de raccord de pression (P), de raccord de travail (A) et de raccord de réservoir (T).

6. Soupape hydraulique selon la revendication 1, **caractérisée en ce que** le poussoir de soupape (15) est fabriqué sous forme de corps moulé en plastique et présente des nervures saillantes (19) avec lesquelles il est guidé dans le boîtier de soupape (14) du côté du fond intermédiaire (31) tourné vers l'induit magnétique (8), tandis que les corps d'étanchéité (22, 23) du poussoir de soupape (15) s'étendent du côté du fond intermédiaire (31) opposé à l'induit magnétique (8) et présentent des surfaces d'étanchéité (24, 25) de forme conique et tournées l'une vers l'autre, qui coopèrent en alternance avec les sièges de soupape (26, 27), qui sont façonnés sur les douilles d'étanchéité (17, 18) réalisées en forme de cuvette et pressées dans le boîtier de soupape.

7. Soupape hydraulique selon la revendication 1, **caractérisée en ce qu'**au moins une section transversale de débordement (39) subsiste dans la direction de l'induit magnétique (8) entre le poussoir de soupape (15) et le fond intermédiaire (31).

8. Soupape hydraulique selon la revendication 1, **caractérisée en ce que** la soupape hydraulique (1) sert à la commande d'actionneurs déplaçables hydrauliquement d'une commande de soupape variable d'un moteur à combustion interne.
